# EUROPEAN PATENT APPLICATION

(11) **EP 2 112 783 A2**
(43) Date of publication of application: **28.10.2009**
(21) Application number: 09156852.7
(22) Date of filing: 31.03.2009
(51) Int. Cl.: H04L 12/24

(54) **Knowledge-based failure recovery support system**

(30) Priority: 21.04.2008 JP 2008110283
(71) Applicant: NEC CORPORATION, Tokyo (JP)
(72) Inventor: Yamaguchi, Keisuke, Tokyo (JP)
(74) Representative: Betten & Resch

(57) **Abstract**

A user terminal includes a software list storage unit for storing a software list, a knowledge base storage unit for storing a knowledge base, a knowledge base input unit for inputting a knowledge base from a relay server, and a new failure notification unit for transmitting new failure information to the relay server in the event of a new failure. The relay server relays data transmissions between the user terminal and a knowledge supply server. Each of knowledge supply server includes a knowledge base creation unit for creating a knowledge base and a knowledge base transmission unit for transmitting the created knowledge base to the relay server. Upon receipt of new failure information, the knowledge base creation unit adds knowledge information about the new failure information to a knowledge base.

## Description

This application is based upon and claims the benefit of priority from Japanese patent application No. 2008-110283, filed on April 21st, 2008, the disclosure of which is incorporated herein in its entirety by reference.

### TECHNICAL FIELD

The present invention relates to a system for providing support for failure recovery in a plurality of networked information processing devices, and more particularly to a knowledge-based failure recovery support system that uses a knowledge base.

### BACKGROUND ART

There are various proposed systems that can quickly recover from a failure in a networked information processing device without imposing a burden on an operator or without requiring operator intervention by making use of a knowledge base (also referred to as a knowledge database) storing failure information and failure recovery methods (recovery information).

A system (knowledge-based operations management system) disclosed, for instance, in Japanese Patent Application Publication JP-P2004-178296A includes a plurality of monitored servers, a monitoring server which has a knowledge database storing a recovery command and a guide message (recovery data) and collects failure information from the monitored servers, and a monitoring terminal which displays information sent from the monitoring server and is operated by an operator.

When a failure occurs in a monitored server within the above-mentioned system, the monitored server conveys failure information to the monitoring server. Upon receipt of the failure information, the monitoring server searches the knowledge database for recovery data corresponded to the received failure information, transmits retrieved recovery data to the monitored server, and issues an instruction for recovery command execution.

Upon receipt of the instruction for recovery command execution, the monitored server executes the recovery command and transmits the result of command execution (recovery result) to the monitoring server. The monitoring server then receives the recovery result and forwards it to the monitoring terminal. A system administrator or other personnel can confirm the recovery result through the monitoring terminal. The system administrator or other personnel can also update the recovery data (for instance, by making additions or corrections to the recovery data) through the monitoring terminal.

### SUMMARY

It is an exemplary object of the present invention to provide an easy-to-introduce, highly practical, knowledge-based failure recovery support system, a user terminal, a relay server, a knowledge supply server, and a data relay method.

In an exemplary aspect of the present invention, the knowledge-based failure recovery support system includes a user terminal, a relay server, and a plurality of knowledge supply servers. The user terminal includes a software list storage unit for storing a list of executable software; a first knowledge base storage unit for storing a plurality of software-type-specific knowledge bases, which stores knowledge information including failure information and recovery information for the failure information; a knowledge base input unit for inputting the knowledge base from the relay server, and a new failure notification unit which, in the event of a new failure that is not registered in the knowledge base stored in the first knowledge base storage unit, creates new failure information that includes at least the description of the new failure, and transmits the created new failure information to the relay server. The relay server includes a user terminal handling unit for exchanging data with the user terminal through a network; a knowledge supply server handling unit for exchanging data with each of knowledge supply server through the network; and a second knowledge base storage unit for storing a plurality of software-type-specific knowledge bases that is inputted from each of knowledge supply server by the knowledge supply server handling unit. Each of knowledge supply server includes a knowledge base creation unit for creating a software-type-specific knowledge base in accordance with operator-input information; a third knowledge base storage unit for storing the created knowledge base; and a knowledge base transmission unit for transmitting the knowledge base stored in the third knowledge base storage unit to the relay server. When the new failure information is received from the user terminal through the relay server, the knowledge base creation unit creates knowledge information about the new failure information and adds the created knowledge information to the associated knowledge base.

In an exemplary aspect of the present invention, the knowledge-based failure recovery support system includes a user terminal, a relay server, and a plurality of knowledge supply servers. The user terminal includes a software list storage unit for storing a list of executable software; a first knowledge base storage unit for storing a plurality of software-type-specific knowledge bases, which stores knowledge information including failure information and recovery information for the failure information; a knowledge base input unit for inputting the knowledge base from the relay server; and a new failure notification unit which, in the event of a new failure that is not registered in the knowledge base stored in the first knowledge base storage unit, creates new failure information that includes at least the description of the new failure, and transmits the created new failure information to the relay server. The relay server includes a user terminal handling unit which exchanges data with the user terminal through a first network; a knowledge supply server handling unit which exchanges data with each of knowledge supply server through a second network; and a second knowledge base storage unit which stores a plurality of software-type-specific knowledge bases that is inputted from each of knowledge supply server by the knowledge supply server handling unit. Each of knowledge supply server includes a knowledge base creation unit which creates a software-type-specific knowledge base in accordance with operator-input information; a third knowledge base storage unit for storing the created knowledge base; and a knowledge base transmission unit which transmits the knowledge base stored in the third knowledge base storage unit to the relay server. When the new failure information is received from the user terminal through the relay server, the knowledge base creation unit creates knowledge information about the new failure information and adds the created knowledge information to the associated knowledge base.

In an exemplary aspect of the present invention, the user terminal includes a software list storage unit for storing a list of executable software; a knowledge base storage unit for storing a plurality of software-type-specific knowledge bases, which stores knowledge information including failure information and recovery information for the failure information; a knowledge base input unit which inputs one or a plurality of knowledge bases corresponded to the software list from the relay server by transmitting knowledge base transmission request information including at least the software list to the relay server connected through a predetermined network; and a new failure notification unit which, in the event of a new failure that is not registered in the knowledge bases stored in the knowledge base storage unit, creates new failure information that includes at least the description of the new failure, and transmits the created new failure information to the relay server.

In an exemplary aspect of the present invention, the relay server includes a user terminal handling unit which exchanges data with a user terminal connected through a first network; a knowledge server handling unit which exchanges data with a knowledge supply server connected through a second network; and a knowledge base storage unit which stores a plurality of software-type-specific knowledge bases that is inputted from each of knowledge supply server by the knowledge server handling unit. When knowledge base transmission request information including at least a list of software executable at the user terminal is received from the user terminal, the user terminal handling unit inputs one or a plurality of associated knowledge bases from the knowledge base storage unit in accordance with the software list included in the knowledge base transmission request information, and transmits response information including the one or the plurality of inputted knowledge bases to the user terminal. The knowledge server handling unit transmits new failure information, which is transmitted from the user terminal and received by the user terminal handling unit, to the associated knowledge supply server.

In an exemplary aspect of the present invention, each of knowledge supply server includes a knowledge base creation unit which creates a software-type-specific knowledge base in accordance with operator-input information; a knowledge base storage unit which stores the created knowledge base; and a knowledge base transmission unit which transmits the knowledge base stored in the knowledge base storage unit to a relay server connected through a predetermined network. When new failure information including at least the description of a new failure unregistered in the supplied knowledge base is received from the relay server, the knowledge base creation unit creates knowledge information about the new failure information and adds the created knowledge information to the associated knowledge base.

In an exemplary aspect of the present invention, the data relay method includes a user terminal handling step of exchanging data with a user terminal connected through a first network, a knowledge server handling step of exchanging data with a knowledge supply server connected through a second network, and a knowledge base storage step of storing in a storage device a plurality of software-type-specific knowledge bases that is inputted from each of knowledge supply server in the knowledge server handling step. When knowledge base transmission request information including at least a list of software executable at the user terminal is received from the user terminal, inputting one or a plurality of associated knowledge bases from the storage device in accordance with the software list included in the knowledge base transmission request information and transmits response information including the one or the plurality of inputted knowledge bases to the user terminal in the user terminal handling step. Transmitting new failure information, which is received from the user terminal in the user terminal handling step, to the associated knowledge supply server in the knowledge server handling step.

In an exemplary aspect of the present invention, the data relay program for causing a computer to execute a user terminal handling process for exchanging data with a user terminal that is connected through a first network, a knowledge server handling process for exchanging data with a knowledge supply server that is connected through a second network, and a knowledge base storing process for storing a knowledge base, which is inputted from each of knowledge supply server in the knowledge server handling process, in a storage device on an individual software type basis. When knowledge base transmission request information including at least a list of software executable at the user terminal is received from the user terminal, inputting one or a plurality of associated knowledge bases from the storage device in accordance with the software list included in the knowledge base transmission request information and transmits response information including the one or the plurality of inputted knowledge bases to the user terminal in the user terminal handling process. Transmitting new failure information, which is received from the user terminal in the user terminal handling process, to the associated knowledge supply server in the knowledge server handling process.

### BRIEF DESCRIPTION OF THE DRAWINGS

FIG. 1 is a diagram showing the overall configuration of a knowledge-based failure recovery support system according to an exemplary embodiment of the present invention.

FIG. 2 is a block diagram showing the internal configurations of user terminals, relay server, and knowledge supply servers shown in FIG. 1.

FIG. 3 is a flowchart showing steps that a user terminal and a relay server follow to perform a process when the user terminal inputs a knowledge base.

FIG. 4 is a flowchart showing steps that a user terminal follows to perform a new failure notification process when a new failure occurs at the user terminal.

FIG. 5 is a flowchart showing steps that a knowledge supply server and relay server follow to perform a process when the relay server transmits a new failure notification to the associated knowledge supply server.

FIG. 6 is a block diagram showing a new failure information storage unit.

FIG. 7 is a flowchart showing steps that are followed to perform a new failure addition process.

FIG. 8 is a diagram showing the overall configuration of a knowledge-based failure recovery support system according to another exemplary embodiment of the present invention.

### DESCRIPTION OF EXEMPLARY EMBODIMENTS

Exemplary embodiments of a knowledge-based failure recovery support system according to the present invention will now be described with reference to the accompanying drawings.

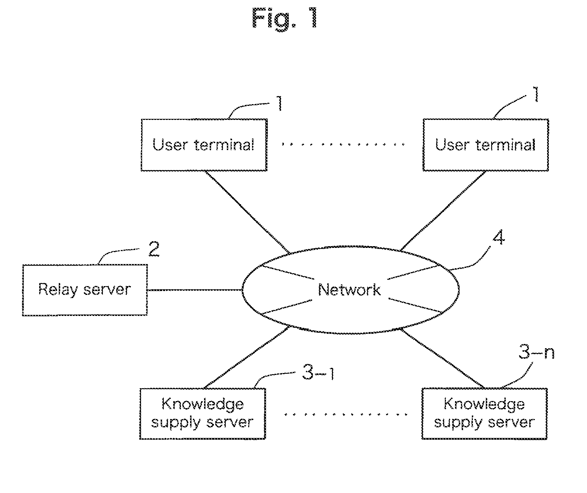

FIG. 1 is a diagram showing the overall configuration of a knowledge-based failure recovery support system according to the present exemplary embodiment. The knowledge-based failure recovery support system includes one or a plurality of user terminals 1, a relay server 2, and a plurality of knowledge supply servers 3. The user terminals 1, relay server 2, and knowledge supply servers 3 are connected to a network 4 such as the Internet and capable of communicating with each other.

In the system, each user terminal 1 incorporates a knowledge base supplied from a knowledge supply server 3. When a failure occurs due to software execution, the user terminal 1 uses the knowledge base to recover from the failure. If the failure is new and cannot be corrected through the use of the knowledge base, the user terminal 1 transmits the information about the failure (new failure information) to the relay server 2 (new failure notification). Further, the user terminal 1 periodically inputs a knowledge base, which is created and managed by the knowledge supply server 3, through the relay server 2. The relay server 2 relays data transmissions between the user terminal 1 and the knowledge supply server 3.

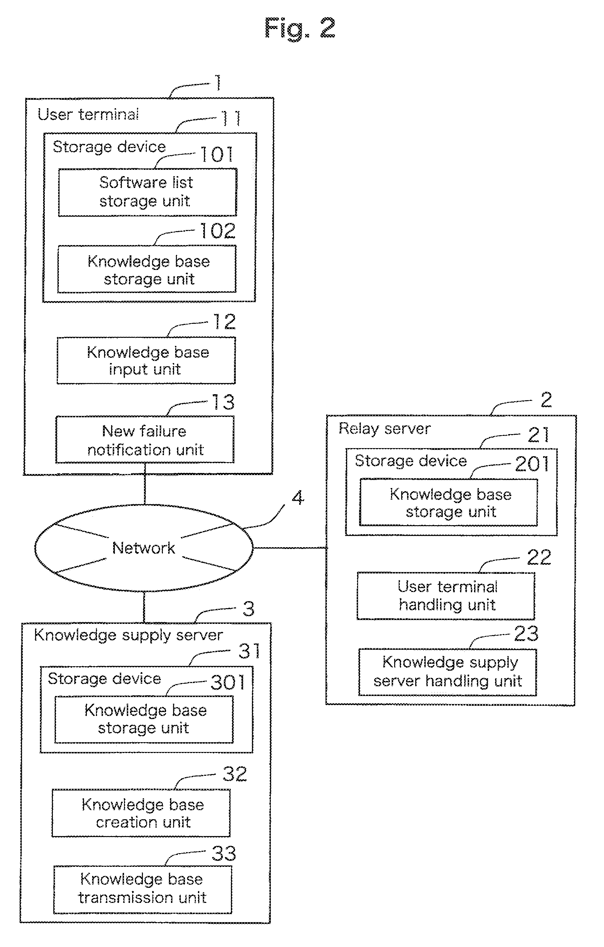

The user terminal 1 is an information processing device (for example, a personal computer). As shown in FIG. 2, the user terminal 1 includes a storage device 11 (for example, a hard disk), a knowledge base input unit 12 which operates under program control, and a new failure notification unit 13 which operates under program control. The storage device 11 includes a software list storage unit 101 which stores a software list, that is, a list of software used at the user terminal 1, and a knowledge base storage unit 102 which stores a knowledge base that is received (downloaded) from the knowledge supply server 3 through the relay server 2.

The knowledge base is a database for storing knowledge information, which includes failure information, that is, the information about a software execution failure, and recovery information, that is, the information about a failure recovery (correction) method. The knowledge base is prepared for each software type. The failure information includes, for instance, the description of a failure and an error message that will be displayed in the event of a failure. The recovery information includes, for instance, a recovery command and a guide message.

The knowledge base input unit 12 inputs the latest knowledge base from the relay server 2 on a periodic basis (e.g., at a predetermined time every day). In the event of a new failure that is not registered in the knowledge base (i.e., a failure that cannot be corrected through the use of the knowledge base), the new failure notification unit 13 transmits new failure information, that is, the information about the new failure, to the relay server 2. The new failure information includes the description of the new failure (e.g., software identification information, failure conditions, and error message). If an operator at the user terminal 1 has eliminated the new failure by a new correction method, the new failure information additionally includes recovery information that describes the employed correction method.

The relay server 2 is an information processing device (for example, a workstation or a server). It includes a storage device 21 (for example, a hard disk), a user terminal handling unit 22 which operates under program control, and a knowledge supply server handling unit 23 which operates under program control. The storage device 21 includes a knowledge base storage unit 201, which stores knowledge bases inputted from a plurality of knowledge base suppliers (i.e., knowledge supply servers 3). The knowledge base storage unit 201 stores the knowledge bases in such a manner that the stored knowledge bases are sorted according to the associated knowledge supply servers 3 (knowledge base suppliers). Further, the knowledge base inputted from each knowledge supply server 3 is sorted according to the associated software types and is maintained.

The user terminal handling unit 22 exchanges data with the individual user terminals 1. In accordance with a knowledge base transmission request from a user terminal 1, the user terminal handling unit 22 transmits a requested knowledge base to the user terminal 1. The user terminal handling unit 22 also performs a process for receiving new failure information that is transmitted from the user terminal 1.

The knowledge supply server handling unit 23 exchanges data with each knowledge supply server 3. The knowledge supply server handling unit 23 inputs the latest knowledge base from each knowledge supply server 3 on a periodic basis (e.g., at a predetermined time every day). Further, the knowledge supply server handling unit 23 transmits new failure information, which is transmitted from a user terminal 1, to the associated knowledge supply server 3.

The knowledge supply server 3 is an information processing device (for example, a personal computer) that is installed by a knowledge base supplier (e.g., software vendor). The knowledge supply server 3 includes a storage device 31 (for example, a hard disk), a knowledge base creation unit 32 which operates under program control, and a knowledge base transmission unit 33 which operates under program control. The storage device 31 includes a knowledge base storage unit 301, which stores knowledge bases concerning one or a plurality of software programs supplied from the knowledge base supplier in such a manner that the stored knowledge bases are sorted according to software type.

The knowledge base creation unit 32 inputs information by operation of an operator via an input/output device (not shown) provided for the knowledge supply server 3 before the introduction of the system. Then the knowledge base creation unit 32 creates knowledge information (failure information and recovery information) in accordance with the inputted information, and builds a knowledge base for each software type. Further, the knowledge base creation unit 32 creates knowledge information, automatically or upon operator command, in accordance with new failure information supplied from a user terminal 1, and adds the created knowledge information to the knowledge base for the associated software. The operator can correct the knowledge base as needed through the input/output device.

The knowledge base transmission unit 33 transmits a knowledge base corresponded to a specific software type or knowledge bases supporting all the managed software programs to the relay server 2 in accordance with a knowledge base transmission request from the relay server 2.

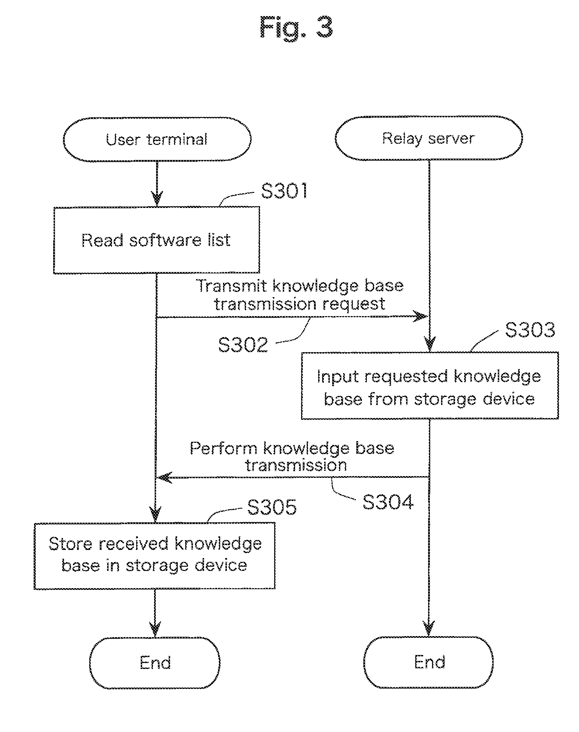

A process performed when a user terminal 1 inputs a knowledge base from the relay server 2 will now be described. FIG. 3 is a flowchart showing steps that the knowledge base input unit 12 of the user terminal 1 and the user terminal handling unit 22 of the relay server 2 perform when the user terminal 1. inputs a knowledge base. This process is performed on a periodic basis (e.g., once at a predetermined time every day)

The knowledge base input unit 12 performs step S301 to input a list of software used at the user terminal 1 (that is, a list of software installed on the user terminal 1) from the software list storage unit 101 of the stowage device 11. Next, the knowledge base input unit 12 performs step S302 to create knowledge base transmission request information, which includes the inputted software list, and transmit the created knowledge base transmission request information to the relay server 2.

Upon receipt of the knowledge base transmission request information from the user terminal 1, the user terminal handling unit 22 of the relay server 2 extracts the software list from the knowledge base transmission request information. The user terminal handling unit 22 then performs step S303 to search the knowledge base storage unit 201 of the storage device 21 and input the knowledge base for each software program in the software list. There are two cases according to the suppliers of the inputted knowledge bases. The first case is that a supplier is fixed for all software programs in the software list. The second case is that a plurality of suppliers are fixed for all software programs in the software list. The user terminal handling unit 22 then performs step S304 to create response information including one or a plurality of inputted knowledge bases and transmit the created response information to the requesting user terminal 1.

Upon receipt of the response information from the relay server 2, the knowledge base input unit 12 of the user terminal 1 performs step S305 to extract the knowledge bases from the response information and store them in the knowledge base storage unit 102 of the storage device 11. The knowledge bases are now updated to the latest version.

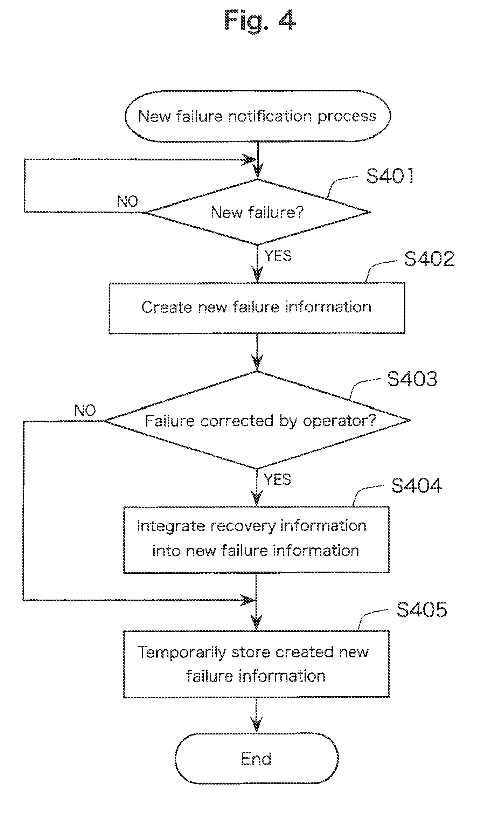

A new failure notification process, which is performed when a user terminal 1 has encountered a new failure that cannot be corrected by a knowledge base, will now be described. FIG. 4 is a flowchart showing steps that the new failure notification unit 13 of the user terminal 1 follows to perform the new failure notification process when a new failure occurs at the user terminal 1.

When a new failure occurs (when the query in step S401 is answered "Yes"), the new failure notification unit 13 performs step S402 to create new failure information, which includes the description of the new failure (e.g., the identification information about executed software, the failure conditions, and an error message). Further, the new failure notification unit 13 performs step S403 to monitor input procedures performed by an operator and the internal status of the user terminal 1, and judge whether the failure is corrected by the operator.

If the judgment result obtained in step S403 indicates that the failure is corrected by the operator (when the query in step S403 is answered "Yes"), the new failure notification unit 13 performs step S404 to input the employed failure correction procedure as recovery information and integrate the recovery information into the created new failure information.

The new failure notification unit 13 performs step S405 to temporarily store the created new failure information in a predetermined area of the storage device 11 or in a memory (not shown) such as a RAM. The stored (one piece or a plurality of pieces of) new failure information is transmitted as a new failure notification to the relay server 2 periodically (e.g., at a predetermined time). If, in this instance, no new failure information is present, the new failure notification need not be issued. However, a notification may be issued to indicate such a situation, that is, to indicate that no new failure is encountered.

The new failure notification may be issued at any time. For example, it may be issued to the relay server 2 immediately after the creation of new failure information or when a predetermined value is reached by the number of occurrences of new failure.

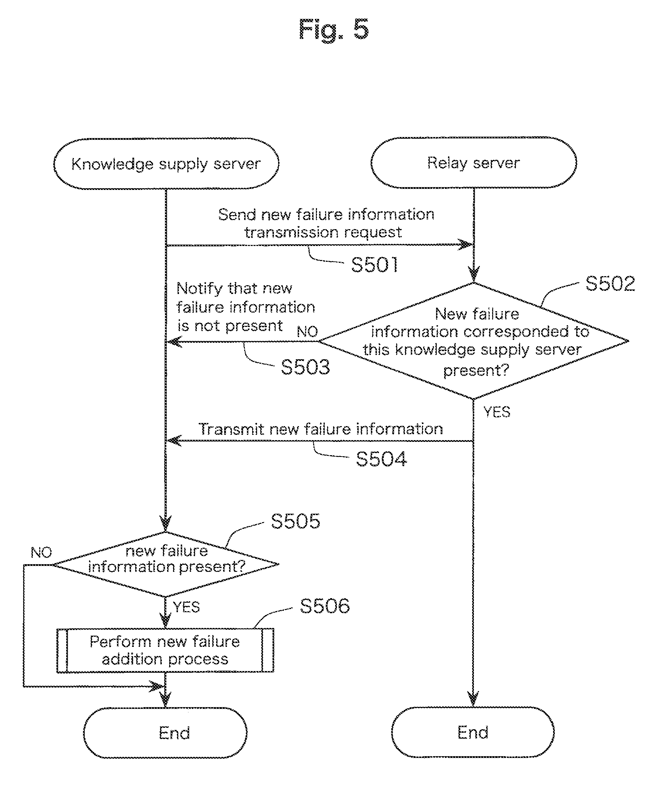

A process performed when a new failure notification issued by a user terminal 1 is to be transmitted from the relay server 2 to the associated knowledge supply server 3 will now be described. FIG. 5 is a flowchart showing steps that are followed by the knowledge base creation unit 32 of the knowledge supply server 3 and the knowledge supply server handling unit 23 of the relay server 2 to perform the process. By the way, steps is shown in FIG. 5 are followed to perform during the process performed when the new failure notification is to be transmitted from the relay server 2 to the associated knowledge supply server 3. The process is performed on a periodic basis (e.g., once at a predetermined time every day).

First of all, the knowledge base creation unit 32 of the knowledge supply server 3 performs step S501 to send a new failure information transmission request to the relay server 2. Upon receipt of the request, the knowledge supply server handling unit 23 of the relay server 2 performs step S502 to check whether the new failure information corresponded to the knowledge supply server 3 is received from the user terminal 1.

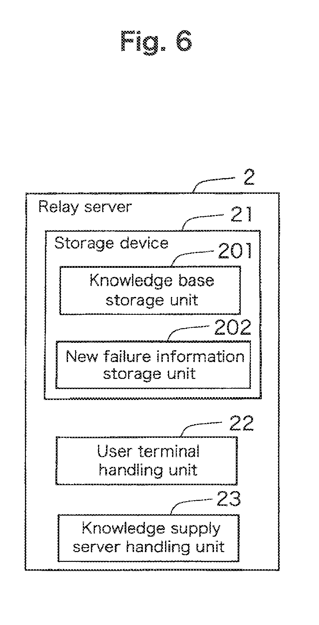

The relay server 2 stores the new failure information from the user terminal 1 in a predetermined area of the storage device 21 such as a new failure information storage unit 202 shown in FIG. 6. More specifically, the user terminal handling unit 22 of the relay server 2 uses retained knowledge supplier information to store the new failure information from the user terminal 1 in such a manner that the stored new failure information is sorted according to the associated knowledge base suppliers. The knowledge supplier information is the information about knowledge base suppliers. This information includes, for instance, the types of software supplied from the knowledge base suppliers and access information such as the address of the knowledge supply server 3 on the network 4. The knowledge supply server handling unit 23 of the relay server 2 searches the new failure information storage unit 202 to check whether the new failure information corresponded to the knowledge supply server 3 is present.

If the check result obtained in step S502 does not indicate that new failure information is present (if the query in step S502 is answered "No"), the knowledge supply server handling unit 23 performs step S503 to transmit response information to the requesting knowledge supply server 3 for the purpose of indicating that the new failure information is not present. If, on the other hand, the associated new failure information is present (if the query in step S502 is answered "Yes"), the knowledge supply server handling unit 23 performs step S504 to transmit response information including one piece or a plurality of pieces of associated new failure information to the knowledge supply server 3.

The knowledge base creation unit 32 of the knowledge supply server 3 performs step S505 to check the response information from the relay server 2. If the check result obtained in step S505 indicates that the new failure information is present (if the query in step S505 is answered "Yes"), the knowledge base creation unit 32 follows step S506 to perform a later-described new failure addition process. The new failure addition process may not only be performed immediately after the new failure information is inputted from the relay server 2, but also on a periodic basis, for instance. Another alternative would be to perform the new failure addition process on a non-periodic basis in accordance with an instruction, for instance, from an operator at the knowledge supply server 3.

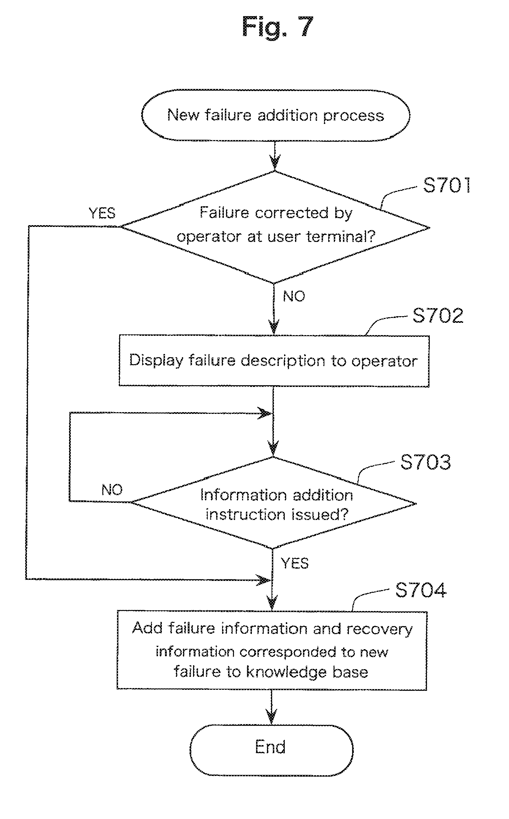

The new failure addition process performed by the knowledge supply server 3 will now be described with reference to a flowchart in FIG. 7. First of all, the knowledge base creation unit 32 performs step S701 to check whether the new failure information includes recovery information. If the query in step S701 is answered "No" to indicate that the new failure information does not include recovery information (i.e., the failure is not eliminated by the operator at the user terminal 1), the knowledge base creation unit 32 performs step S702 to display the description of the failure, for instance, on a monitor of the input/output device (not shown). If, on the other hand, the query in step S701 is answered "Yes" to indicate that the new failure information includes recovery information (i.e., the failure is eliminated by the operator at the user terminal 1), the knowledge base creation unit 32 proceeds to step S704.

Subsequently, when the query in step S703 is answered "Yes" to indicate that an instruction for addition to a knowledge base is input as the operator has entered a procedure for correcting the failure, the knowledge base creation unit 32 performs step S704 to additionally register the knowledge information about the failure (failure information and recovery information) into the associated knowledge base.

As described above, the knowledge supply server 3 can collect from a user terminal 1 the information about a failure that was unpredictable at the time of system introduction, and update a knowledge base in accordance with the collected information.

When, in the above new failure addition process (see FIG. 7), the query in step S701 is answered "Yes" to indicate that the new failure information includes recovery information, step S704 is performed to automatically add the failure information and recovery information to a knowledge base without presenting a failure description to the operator. In this case, too, an alternative would be to present a failure description to the operator and update the knowledge base in accordance with an information addition instruction from the operator.

As described above, the knowledge-based failure recovery support system according to the present exemplary embodiment is such that each user terminal 1 can promptly handle a failure by making use of a knowledge base supplied, for instance, by a software vendor from the beginning of system introduction. Further, each user terminal 1 can periodically download a knowledge base from the relay server 2. Therefore, the latest knowledge base can be used at all times.

Furthermore, the knowledge supply server 3 can improve the quality of a knowledge base because the knowledge information about a new failure (failure information and recovery information) is collected by each user terminal 1 and newly added to the knowledge base. Since the new failure information collected by each user terminal 1 can be used as described above to expand the knowledge base, a vendor who supplies a knowledge base, for example, can reduce the development cost for the knowledge base to be initially supplied. In addition, a high-quality knowledge base can be supplied to provide enhanced software sales promotion.

Moreover, the knowledge-based failure recovery support system provides the following excellent advantages because it includes the relay server 2:
(1) A user terminal 1 can transmit a software list to the relay server 2 and input the associated latest knowledge base without having to directly access each knowledge supply server 3. This makes it easy to perform a knowledge base update.
(2) A knowledge supply server 3 can input new failure information from each user terminal 1 through the relay server 2. This makes it possible to input new failure information with high efficiency.
(3) A knowledge supply server 3 can supply the latest knowledge base to each user terminal 1 simply by transmitting a knowledge base to the relay server 2. This makes it possible to supply a knowledge base with increased efficiency.

The present invention is not limited to the exemplary embodiment described above, but extends to various modifications that nevertheless fall within the scope of the appended claims.

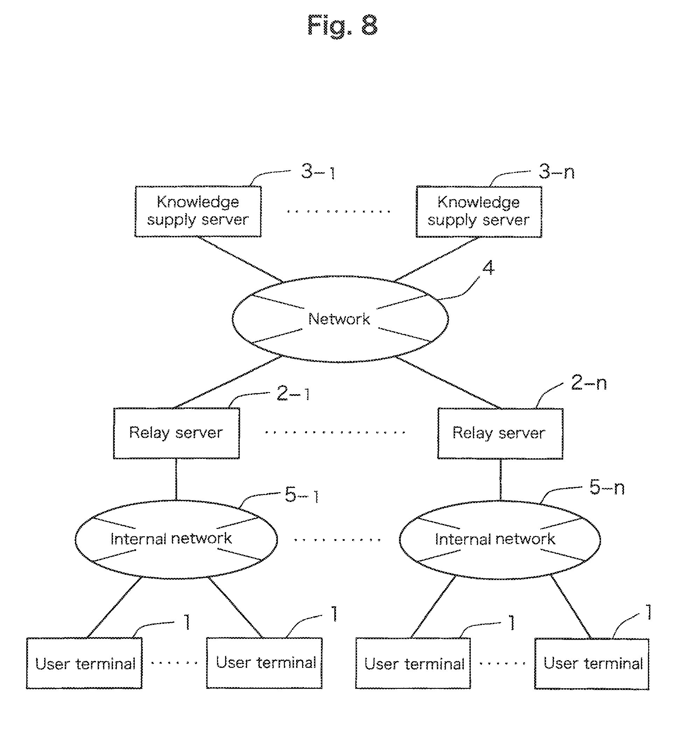

For example, the exemplary embodiment described above includes one relay server 2, which is connected to the Internet or other network 4, and allows each user terminal 1 to exchange data with the relay server 2 through the network 4. However, the present invention is not limited to such a configuration. For example, the present invention may alternatively include a plurality of relay servers 2 as shown in FIG. 8.

The knowledge-based failure recovery support system shown in FIG. 8 is configured so that a plurality of relay servers 2 and a plurality of knowledge supply servers 3 are connected to a network 4 (for example, the Internet) and capable of communicating with each other. Each relay server 2 is also connected to an internal network 5 (for example, an intranet) built, for instance, within a business organization. One or a plurality of user terminals 1 are connected to the internal network 5 to exchange data with the relay server 2 connected to the same internal network 5. In this configuration, each relay server 2 typically functions as a so-called proxy server.

The use of the above configuration, which includes a plurality of relay servers 2, makes it possible to reduce the processing load on each relay server 2 and enhance the overall system reliability.

Further, the exemplary embodiment described above assumes that a user terminal 1 periodically transmits knowledge base transmission request information to the relay server 2. Alternatively, however, the knowledge base transmission request information may be non-periodically transmitted in accordance, for instance, with an instruction from an operator.

Similarly, a knowledge supply server 3 may non-periodically issue a new failure information transmission request to the relay server 2 in accordance, for instance, with an instruction from the operator. Alternatively, however, the relay server 2 may periodically transmit the associated new failure information to each knowledge supply server 3.

The processing steps indicated in the flowcharts described in conjunction with the exemplary embodiment described above need not always be performed in the order indicated in the flowcharts. It should be understood that the order of such processing steps may be changed within the scope of the present invention.

In general, present-day information processing devices incorporate a wide variety of software programs and are configured to use such software programs. Therefore, a wide variety of failures may occur due to software execution.

Under the above circumstances, the invention disclosed, for instance, in Japanese Patent Application Publication JP-P2004-178296A assumes that a system administrator or other personnel makes preparations for system operation through the use of a management terminal, for instance, by defining failures to be managed and recovery data for such failures. However, such preparations are very troublesome and time-consuming. In addition, it is not easy to update the recovery data and perform other maintenance tasks.

An exemplary advantage according to the present invention is such that each user terminal can promptly handle various software failures from the beginning of system introduction. Further, the information about a new failure occurring at a user terminal is conveyed to the associated knowledge supply server so that the knowledge information about the new failure (failure information and recovery information) is added to a knowledge base in each of knowledge supply server. This makes it easy to provide improved knowledge base quality. In addition, the user terminal can periodically input such an updated knowledge base and use the latest knowledge base at all times.

Moreover, the new failure information collected from the user terminal can be used to expand the knowledge base. Therefore, a vendor who supplies a knowledge base, for example, can reduce the development cost for the knowledge base to be initially supplied. In addition, a high-quality knowledge base can be supplied to provide enhanced software sales promotion.

While the present invention has been particularly shown and described with reference to exemplary embodiments thereof, the present invention is not limited to these embodiments. It will be understood by those of ordinary skill in the art that various changes in form and details may be made therein without departing from the spirit and scope of the present invention as defined by the claims.

Example 1 describes a knowledge-based failure recovery support system which includes a user terminal, a relay server, and a plurality of knowledge supply servers. The user terminal includes software list storage means for storing a list of executable software; first knowledge base storage means for storing a plurality of software-type-specific knowledge bases, which stores knowledge information including failure information and recovery information for the failure information; knowledge base input means for inputting the knowledge base from the relay server; and new failure notification means for, in the event of a new failure that is not registered in the knowledge base stored in the first knowledge base storage means, creating new failure information that includes at least the description of the new failure, and transmitting the created new failure information to the relay server. The relay server includes user terminal handling means for exchanging data with the user terminal through a network; knowledge supply server handling means for exchanging data with each of knowledge supply server through the network; and second knowledge base storage means for storing a plurality of software-type-specific knowledge bases that is inputted from each of knowledge supply server by the knowledge supply server handling means. Each of knowledge supply server includes knowledge base creation means for creating a software-type-specific knowledge base in accordance with operator-input information; third knowledge base storage means for storing the created knowledge base; and knowledge base transmission means for transmitting the knowledge base stored in the third knowledge base storage means to the relay server. When the new failure information is received from the user terminal through the relay server, the knowledge base creation means creates knowledge information about the new failure information and adds the created knowledge information to the associated knowledge base.

Example 2 describes a knowledge-based failure recovery support system which includes a user terminal, a relay server, and a plurality of knowledge supply servers. The user terminal includes software list storage means for storing a list of executable software; first knowledge base storage means for storing a plurality of software-type-specific knowledge bases, which stores knowledge information including failure information and recovery information for the failure information; knowledge base input means for inputting the knowledge base from the relay server; and new failure notification means which, in the event of a new failure that is not registered in the knowledge base stored in the first knowledge base storage means, creates new failure information that includes at least the description of the new failure, and transmits the created new failure information to the relay server. The relay server includes user terminal handling means for exchanging data with the user terminal through a first network; knowledge supply server handling means for exchanging data with each of knowledge supply server through a second network; and second knowledge base storage means for storing a plurality of software-type-specific knowledge bases that is inputted from each of knowledge supply server by the knowledge supply server handling means. Each of knowledge supply server includes knowledge base creation means for creating a software-type-specific knowledge base in accordance with operator-input information; third knowledge base storage means for storing the created knowledge base; and knowledge base transmission means for transmitting the knowledge base stored in the third knowledge base storage means to the relay server. When the new failure information is received from the user terminal through the relay server, the knowledge base creation means creates knowledge information about the new failure information and adds the created knowledge information to the associated knowledge base.

Example 3 describes the knowledge-based failure recovery support system as described in Example 1; wherein the knowledge base input means of the user terminal transmits knowledge base transmission request information, which includes at least the software list, to the relay server; and wherein the user terminal handling means of the relay server inputs one or a plurality of associated knowledge bases from the second knowledge base storage means in accordance with the software list included in the received knowledge base transmission request information and transmits response information including the one or the plurality of inputted knowledge bases to the user terminal.

Example 4 describes the knowledge-based failure recovery support system as described in Example 1 or 2; wherein the new failure information includes recovery information for the new failure.

Example 5 describes a user terminal which includes software list storage means for storing a list of executable software; knowledge base storage means for storing a plurality of software-type-specific knowledge bases, which stores knowledge information including failure information and recovery information for the failure information; knowledge base input means for inputting one or a plurality of knowledge bases corresponded to the software list from a relay server, which is connected through a predetermined network, by transmitting knowledge base transmission request information including at least the software list to the relay server; and new failure notification means which, in the event of a new failure that is not registered in the knowledge base stored in the knowledge base storage means, creates new failure information that includes at least the description of the new failure, and transmits the created new failure information to the relay server.

Example 6 describes a relay server which includes user terminal handling means for exchanging data with a user terminal that is connected through a first network; knowledge server handling means for exchanging data with a knowledge supply server that is connected through a second network; and knowledge base storage means for storing a plurality of software-type-specific knowledge bases that is inputted from each of knowledge supply server by the knowledge server handling means. When knowledge base transmission request information including at least a list of software executable at the user terminal is received from the user terminal, the user terminal handling means inputs one or a plurality of associated knowledge bases from the knowledge base storage means in accordance with the software list included in the knowledge base transmission request information and transmits response information including the one or the plurality of inputted knowledge bases to the user terminal. The knowledge server handling means transmits new failure information, which is supplied from the user terminal and received by the user terminal handling means, to the associated knowledge supply server.

Example 7 describes a knowledge supply server which includes knowledge base creation means for creating a software-type-specific knowledge base in accordance with operator-input information; knowledge base storage means for storing the created knowledge base; and knowledge base transmission means for transmitting the knowledge base stored in the knowledge base storage means to a relay server that is connected through a predetermined network. When new failure information including at least the description of a new failure unregistered in the supplied knowledge base is received from the relay server, the knowledge base creation means creates knowledge information about the new failure information and adds the created knowledge information to the associated knowledge base.

Example 8 describes a data relay method which includes exchanging data with a user terminal that is connected through a first network; exchanging data with a knowledge supply server that is connected through a second network; storing a knowledge base inputted from each of knowledge supply server in a storage device on an individual software type basis; inputting, when knowledge base transmission request information including at least a list of software executable at the user terminal is received from the user terminal, one or a plurality of associated knowledge bases from the storage device in accordance with the software list included in the knowledge base transmission request information, and transmitting response information including the one or the plurality of inputted knowledge bases to the user terminal; and transmitting new failure information, which is received from the user terminal, to the associated knowledge supply server.

Example 9 describes a data relay program for causing a computer to execute a user terminal handling process for exchanging data with a user terminal that is connected through a first network, a knowledge server handling process for exchanging data with a knowledge supply server that is connected through a second network, and a knowledge base storing process for storing a knowledge base, which is inputted from each of knowledge supply server in the knowledge server handling process, in a storage device on an individual software type basis. When knowledge base transmission request information including at least a list of software executable at the user terminal is received from the user terminal, inputting one or a plurality of associated knowledge bases from the storage device in accordance with the software list included in the knowledge base transmission request information and transmits response information including the one or the plurality of inputted knowledge bases to the user terminal in the user terminal handling process. Transmitting new failure information, which is received from the user terminal in the user terminal handling process, to the associated knowledge supply server in the knowledge server handling process.
According to an exemplary embodiment, a user terminal includes a software list storage unit for storing a software list, a knowledge base storage unit for storing a knowledge base, a knowledge base input unit for inputting a knowledge base from a relay server, and a new failure notification unit for transmitting new failure information to the relay server in the event of a new failure. The relay server relays data transmissions between the user terminal and a knowledge supply server. Each of knowledge supply server includes a knowledge base creation unit for creating a knowledge base and a knowledge base transmission unit for transmitting the created knowledge base to the relay server. Upon receipt of new failure information, the knowledge base creation unit adds knowledge information about the new failure information to a knowledge base.

## Claims

1. A knowledge-based failure recovery support system comprising:
a user terminal;
a relay server; and
a plurality of knowledge supply servers;
wherein the user terminal includes
software list storage means for storing a list of executable software,
first knowledge base storage means for storing a plurality of software-type-specific knowledge bases, which stores knowledge information including failure information and recovery information for the failure information,
knowledge base input means for inputting the knowledge base from the relay server, and
new failure notification means for, in the event of a new failure that is not registered in the knowledge base stored in the first knowledge base storage means, creating new failure information that includes at least the description of the new failure, and transmitting the created new failure information to the relay server;
wherein the relay server includes
user terminal handling means for exchanging data with the user terminal through a network,
knowledge supply server handling means for exchanging data with each of knowledge supply server through the network, and
second knowledge base storage means for storing a plurality of software-type-specific knowledge bases that is inputted from each of knowledge supply server by the knowledge supply server handling means;
wherein each of knowledge supply server includes
knowledge base creation means for creating a software-type-specific knowledge base in accordance with operator-input information,
third knowledge base storage means for storing the created knowledge base, and
knowledge base transmission means for transmitting the knowledge base stored in the third knowledge base storage means to the relay server; and
wherein, when the new failure information is received from the user terminal through the relay server, the knowledge base creation means creates knowledge information about the new failure information and adds the created knowledge information to the associated knowledge base.

2. A knowledge-based failure recovery support system comprising:
a user terminal;
a relay server; and
a plurality of knowledge supply servers;
wherein the user terminal includes
software list storage means for storing a list of executable software,
first knowledge base storage means for storing a plurality of software-type-specific knowledge bases, which stores knowledge information including failure information and recovery information for the failure
information,
knowledge base input means for inputting the knowledge base from the relay server, and
new failure notification means for, in the event of a new failure that is not registered in the knowledge base stored in the first knowledge base storage means, creating new failure information that includes at least the description of the new failure, and transmitting the created new failure information to the relay server;
wherein the relay server includes
user terminal handling means for exchanging data with the user terminal through a first network,
knowledge supply server handling means for exchanging data with each of knowledge supply server through a second network, and
second knowledge base storage means for storing a plurality of software-type-specific knowledge bases that is inputted from each of knowledge supply server by the knowledge supply server handling means;
wherein each of knowledge supply server includes
knowledge base creation means for creating a software-type-specific knowledge base in accordance with operator-input information,
third knowledge base storage means for storing the created knowledge base, and
knowledge base transmission means for transmitting the knowledge base stored in the third knowledge base storage means to the relay server; and
wherein, when the new failure information is received from the user terminal through the relay server, the knowledge base creation means creates knowledge information about the new failure information and adds the created knowledge information to the associated knowledge base.

3. The knowledge-based failure recovery support system according to claim 1 or 2, wherein the knowledge base input means of the user terminal transmits knowledge base transmission request information, which includes at least the software list, to the relay server; and wherein the user terminal handling means of the relay server inputs one or a plurality of associated knowledge bases from the second knowledge base storage means in accordance with the software list included in the received knowledge base transmission request information and transmits response information including the one or the plurality of inputted knowledge bases to the user terminal.

4. The knowledge-based failure recovery support system according to any one of claims 1 to 3, wherein the new failure information includes recovery information for the new failure.

5. A user terminal comprising:
software list storage means for storing a list of executable software;
knowledge base storage means for storing a plurality of software-type-specific knowledge bases, which stores knowledge information including failure information and recovery information for the failure information;
knowledge base input means for inputting one or a plurality of knowledge bases corresponded to the software list from a relay server, which is connected through a predetermined network, by transmitting knowledge base transmission request information including at least the software list to the relay server; and
new failure notification means for, in the event of a new failure that is not registered in the knowledge base stored in the knowledge base storage means, creating new failure information that includes at least the description of the new failure, and transmitting the created new failure information to the relay server.

6. A relay server comprising:
user terminal handling means for exchanging data with a user terminal that is connected through a first network;
knowledge server handling means for exchanging data with a knowledge supply server that is connected through a second network; and
knowledge base storage means for storing a plurality of software-type-specific knowledge bases that is inputted from each of knowledge supply server by the knowledge server handling means;
wherein, when knowledge base transmission request information including at least a list of software executable at the user terminal is received from the user terminal, the user terminal handling means inputs one or a plurality of associated knowledge bases from the knowledge base storage means in accordance with the software list included in the knowledge base transmission request information and transmits response information including the one or the plurality of inputted knowledge bases to the user terminal; and
wherein the knowledge server handling means transmits new failure information, which is supplied from the user terminal and received by the user terminal handling means, to the associated knowledge supply server.

7. A knowledge supply server comprising:
knowledge base creation means for creating a software-type-specific knowledge base in accordance with operator-input information;
knowledge base storage means for storing the created knowledge base; and
knowledge base transmission means for transmitting the knowledge base stored in the knowledge base storage means to a relay server that is connected through a predetermined network;
wherein, when new failure information including at least the description of a new failure unregistered in the supplied knowledge base is received from the relay server, the knowledge base creation means creates knowledge information about the new failure information and adds the created knowledge information to the associated knowledge base.

8. A data relay method comprising:
exchanging data with a user terminal that is connected through a first network;
exchanging data with a knowledge supply server that is connected through a second network;
storing a knowledge base inputted from each of knowledge supply server in a storage device on an individual software type basis;
inputting, when knowledge base transmission request information including at least a list of software executable at the user terminal is received from the user terminal, one or a plurality of associated knowledge bases from the storage device in accordance with the software list included in the knowledge base transmission request information, and transmitting response information including the one or the plurality of inputted knowledge bases to the user terminal; and
transmitting new failure information, which is received from the user terminal, to the associated knowledge supply server.

9. A data relay program for causing a computer to execute:
a user terminal handling process for exchanging data with a user terminal that is connected through a first network;
a knowledge server handling process for exchanging data with a knowledge supply server that is connected through a second network; and
a knowledge base storing process for storing a knowledge base, which is inputted from each of knowledge supply server in the knowledge server handling process, in a storage device on an individual software type basis;
wherein, when knowledge base transmission request information including at least a list of software executable at the user terminal is received from the user terminal, inputting one or a plurality of associated knowledge bases from the storage device in accordance with the software list included in the knowledge base transmission request information and transmits response information including the one or the plurality of inputted knowledge bases to the user terminal in the user terminal handling process; and
wherein transmitting new failure information, which is received from the user terminal in the user terminal handling process, to the associated knowledge supply server in the knowledge server handling process.
